# EUROPÄISCHE PATENTANMELDUNG

(11) **EP 1 524 452 A2**
(43) Veröffentlichungstag der Anmeldung: **20.04.2005**
(21) Anmeldenummer: 04024461.8
(22) Anmeldetag: 14.10.2004
(51) Int. Cl.: F16H 1/28

(54) **Antriebsvorrichtung für Werkzeugmaschinen wie Pressen oder dergleichen und Verfahren zur Herstellung einer derartigen Antriebsvorrichtung**

(30) Priorität: 15.10.2003 DE 10347903
(71) Anmelder: Desch Antriebstechnik GmbH & Co. KG, 59759 Arnsberg (DE)
(72) Erfinder: Desch, Alexander P., 59757 Arnsburg (DE); Kowald, Günter, 59757 Arnsberg (DE); Curdes, Herbert, 59759 Arnsberg (DE); Grimm, Andreas, 76297 Stutensee (DE)
(74) Vertreter: Basfeld, Rainer, Dr. Dipl.-Phys.

(57) **Zusammenfassung**

Verfahren zur Herstellung einer Antriebsvorrichtung für Werkzeugmaschinen wie Pressen oder dergleichen, umfassend ein Schwungrad (10) sowie ein Planetengetriebe mit einer Antriebswelle (4), die mit dem Schwungrad (10) kuppelbar ist, und einer Abtriebswelle (5), wobei entsprechend vorgegebenen Anforderungen an das Planetengetriebe dieses derart aus unterschiedlichen Getriebeteilen zusammengesetzt wird, dass es entweder ein erstes Übersetzungsverhältnis oder mindestens ein zweites Übersetzungsverhältnis aufweisen kann, wobei bei der Ausführung mit dem ersten Übersetzungsverhältnis ein Hohlrad (3), erste Planetenräder (2) und ein erstes Sonnenrad (1 ) und wobei bei der Ausführung mit dem mindestens einen zweiten Übersetzungsverhältnis ein zweites, von dem ersten verschiedenes Sonnenrad (1a), zweite, von den ersten verschiedene Planetenräder (2a) und das Hohlrad (3) gemäß dem ersten Übersetzungsverhältnis oder ein diesem hinsichtlich seiner Eigenschaften gleichendes Hohlrad verwendet werden.

## Beschreibung

Die vorliegende Erfindung betrifft ein Verfahren zur Herstellung einer Antriebsvorrichtung für Werkzeugmaschinen wie Pressen oder dergleichen, umfassend ein Schwungrad sowie ein Planetengetriebe mit einer Antriebswelle, die mit dem Schwungrad kuppelbar ist, und einer Abtriebswelle, wobei entsprechend vorgegebenen Anforderungen an das Planetengetriebe dieses derart aus unterschiedlichen Getriebeteilen zusammengesetzt wird, dass es entweder ein erstes Übersetzungsverhältnis oder mindestens ein zweites Übersetzungsverhältnis aufweisen kann. Weiterhin betrifft die vorliegende Erfindung eine Mehrzahl von Getriebeteilen zur Herstellung einer Antriebsvorrichtung für Werkzeugmaschinen, wie Pressen oder dergleichen, insbesondere für die Durchführung des vorgenannten Verfahrens, umfassend mindestens ein Hohlrad, Planetenräder und mindestens ein Sonnenrad, wobei die Mehrzahl von Getriebeteilen für die Herstellung mindestens zweier unterschiedlicher Typen von Planetengetrieben geeignet ist, von denen ein erster Typ ein erstes Übersetzungsverhältnis und ein zweiter Typ ein zweites Übersetzungsverhältnis aufweist. Weiterhin betrifft die vorliegende Erfindung eine Antriebsvorrichtung für Werkzeugmaschinen wie Pressen oder dergleichen, umfassend ein Planetengetriebe mit einer Antriebswelle und einer Abtriebswelle.

Antriebsvorrichtungen der vorgenannten Art sind hinlänglich bekannt und dienen beispielsweise als Komplettantriebe für Pressen oder dergleichen. Derartige Antriebsvorrichtungen müssen in Abhängigkeit von den an sie gestellten Anforderungen bestimmte Spezifikationen, insbesondere bei einer vorgegebenen Drehzahl ein bestimmtes Arbeitsvermögen aufweisen. Dies wird in der Regel durch die Wahl eines bestimmten Übersetzungsverhältnisses realisiert. Üblicherweise wird dabei für jedes gewünschte Übersetzungsverhältnis ein Planetengetriebe aus Teilen zusammengesetzt, die nur bei einem Planetengetriebe mit diesem bestimmten Übersetzungsverhältnis verwendet werden können. Das bedeutet, dass ein Hersteller derartiger Antriebsvorrichtungen Hohlräder, Planetenräder und Sonnenräder für jedes gewünschte Planetengetriebe bzw. für jede gewünschte Übersetzung eines Planetengetriebes vorhalten muss. Weiterhin muss der Hersteller unter Umständen entsprechende Maschinen und Vorrichtungen für die Fertigung der vielen unterschiedlichen Getriebeteile bereithalten. Daraus ergibt sich ein vergleichsweise hoher Kostenaufwand.

Das der vorliegenden Erfindung zugrunde liegende Problem ist die Schaffung eines Verfahrens der eingangs genannten Art und einer Mehrzahl von Getriebeteilen der eingangs genannten Art, mittels denen eine Antriebsvorrichtung der eingangs genannten Art kostengünstiger herstellbar ist.

Dies wird hinsichtlich des Verfahrens durch ein Verfahren der eingangs genannten Art mit den kennzeichnenden Merkmalen der Ansprüche 1 oder 9, hinsichtlich der Mehrzahl von Getriebeteilen durch eine Mehrzahl von Getriebeteilen der eingangs genannten Art mit den kennzeichnenden Merkmalen des Anspruchs 14 sowie hinsichtlich der Antriebsvorrichtung durch eine Antriebsvorrichtung der eingangs genannten Art mit den kennzeichnenden Merkmalen des Anspruchs 16 gelöst. Die Unteransprüche betreffen bevorzugte Ausgestaltungen der Erfindung.

Gemäß Anspruch 1 ist vorgesehen, dass bei der Ausführung mit dem ersten Übersetzungsverhältnis ein Hohlrad, erste Planetenräder und ein erstes Sonnenrad und dass bei der Ausführung mit dem mindestens einen zweiten Übersetzungsverhältnis ein zweites, von dem ersten verschiedenes Sonnenrad, zweite, von den ersten verschiedene Planetenräder und das Hohlrad gemäß dem ersten Übersetzungsverhältnis oder ein diesem hinsichtlich seiner Eigenschaften gleichendes Hohlrad verwendet werden.

Gemäß Anspruch 14 ist vorgesehen, dass die Mehrzahl von Getriebeteilen für den ersten Typ eines Planetengetriebes ein Hohlrad, ein erstes Sonnenrad und erste Planetenräder sowie für den zweiten Typ eines Planetengetriebes das Hohlrad gemäß dem ersten Typ oder ein diesem hinsichtlich seiner Eigenschaften gleichendes Hohlrad, ein zweites, von dem ersten verschiedenes Sonnenrad und zweite von den ersten verschiedene Planetenräder umfasst.

Durch diese Maßnahmen werden für den Bau zweier Planetengetriebe, die sich hinsichtlich ihrer Übersetzung unterscheiden, weniger unterschiedliche Teile benutzt als bei aus dem Stand der Technik bekannten Verfahren. Insbesondere können für derartige Planetengetriebe mit unterschiedlichen Übersetzungen immer die gleichen Hohlräder verwendet werden, so dass nur eine Art von Hohlrädern hergestellt werden muss bzw. nur eine Art von Hohlrädern bevorratet werden muss.

Es besteht erfindungsgemäß die Möglichkeit, dass sich das erste und das zweite Sonnenrad durch die Anzahl ihrer Zähne und/oder durch ihre Durchmesser unterscheiden. Weiterhin besteht die Möglichkeit, dass sich auch die ersten und die zweiten Planetenräder durch die Anzahl ihrer Zähne und/oder durch ihre Durchmesser unterscheiden. Es lässt sich somit durch eine geschickte Wahl der Anzahl der Zähne und/oder der Durchmesser der Planetenräder und der Sonnenräder erreichen, dass trotz ein und desselben Hohlrades derart unterschiedliche Sonnenräder und/oder Planetenräder miteinander kombiniert werden können, dass zwei unterschiedliche Übersetzungsverhältnisse erzielt werden können.

Erfindungsgemäß besteht weiterhin die Möglichkeit, dass das Planetengetriebe einen Planetenträger umfasst, wobei bei der Ausführung mit dem ersten Übersetzungsverhältnis ein erster Steg und Lagerungen für die Planetenräder und wobei bei der Ausführung mit dem mindestens einen zweiten Übersetzungsverhältnis ein zweiter, von dem ersten verschiedener Steg und die Lagerungen gemäß dem ersten Übersetzungsverhältnis oder diesen hinsichtlich ihrer Eigenschaften gleichende Lagerungen verwendet werden. Somit besteht auch die Möglichkeit, bei den beiden unterschiedlichen Planetengetrieben mit unterschiedlichen Übersetzungsverhältnissen zumindest teilweise die gleichen Planetenträger und insbesondere die gleichen Lagerungen zu verwenden, so dass auch hier Kosten eingespart werden können.

Insbesondere können sich dabei der erste Steg und der zweite Steg durch die Anordnung von Bohrungen für Bolzen der Lagerungen unterscheiden. Die Planetenträger für das erste und das zweite Übersetzungsverhältnis unterscheiden sich somit nur durch die Anordnung der Bohrungen in den ansonst gleichen Stegen.

Gemäß Anspruch 9 ist vorgesehen, dass an dem Hohlrad ein Lagerhals ausgebildet ist, auf dem das Schwungrad gelagert werden kann, wobei auf dem Lagerhals bei dem ersten Übersetzungsverhältnis ein anderes Schwungrad als bei dem zweiten Übersetzungsverhältnis als bei dem zweiten Übersetzungsverhältnis gelagert werden kann. Durch die Verwendung des gleichen Lagerhalses für unterschiedliche Schwungräder kann der Teileaufwandt für die erfindungsgemäße Antriebsvorrichtung weiter minimiert werden. Weiterhin kann neben dem gleichen Lagerhals auch immer die gleiche Schwungradlagerung bei unterschiedlichen Schwungrädern verwendet werden.

Insbesondere kann bei dem erfindungsgemäßen Verfahren gemäß Anspruch 1 und/oder Anspruch 9 die Anforderung einer vorgegebenen Drehzahl bei einem bestimmten Arbeitsvermögen durch lediglich zwei Übersetzungsverhältnisse realisiert werden, weil auf mindestens zwei unterschiedliche Schwungräder zurück gegriffen werden kann. Bei dem erfindungsgemäßen Verfahren wird unter Umständen ein größeres und damit massereicheres und weniger kompaktes Schwungrad in Kauf genommen, um das Planetengetriebe kostengünstiger herstellen zu können.

Das Planetengetriebe kann beispielsweise drei Planetenräder oder vier Planetenräder umfassen. Weiterhin besteht die Möglichkeit, dass das erste und das zweite Übersetzungsverhältnis ein Übersetzungsverhältnis zwischen 3 und 13, insbesondere zwischen 3,5 und 10, vorzugsweise zwischen 4 und 6 abdecken. Dabei kann beispielsweise das zweite Übersetzungsverhältnis etwa zwischen 3,5 und 4,5, insbesondere etwa gleich 4 sein. Weiterhin kann das erste Übersetzungsverhältnis etwa zwischen 5 und 7, insbesondere etwa gleich 6 sein. Die vorgenannten Übersetzungsverhältnisse erweisen sich als besonders praktikabel, weil sie bei vielen Anwendungen eingesetzt werden können.

Erfindungsgemäß besteht die Möglichkeit, dass das Planetengetriebe ein drittes Übersetzungsverhältnis, insbesondere ein drittes und ein viertes Übersetzungsverhältnis aufweisen kann. Es besteht somit die Möglichkeit, auch für drei oder sogar vier unterschiedliche Planetengetriebe zumindest einige gleiche Teile zu verwenden, wie beispielsweise jeweils das selbe Hohlrad für ein jedes der drei oder sogar vier unterschiedlichen Planetengetriebe.

Die erfindungsgemäße Antriebsvorrichtung gemäß Anspruch 16 zeichnet sich durch die Herstellung nach dem erfindungsgemäßen Verfahren und/oder durch die Herstellung aus einer erfindungsgemäßen Mehrzahl von Getriebeteilen aus.

Bei der erfindungsgemäßen Antriebsvorrichtung kann die Abtriebswelle mit dem Steg des Planetenträgers verbunden sein. Weiterhin kann die Antriebswelle mit dem Sonnenrad verbunden sein. Weiterhin kann das Schwungrad von einem Motor angetrieben werden und mit der Antriebswelle über eine Kupplung verbindbar sein.

Die erfindungsgemäße Antriebsvorrichtung kann einen an dem Hohlrad ausgebildeten Lagerhals umfassen, auf dem unterschiedliche Schwungräder gelagert werden können. Insbesondere können dabei für unterschiedliche Schwungräder jeweils der gleiche Lagerhals und die gleichen Schwungradlagerungen verwendet werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht einer erfindungsgemäßen Antriebsvorrichtung;
- Fig. 2: einen schematischen Schnitt durch die Antriebsvorrichtung gemäß Fig. 1.

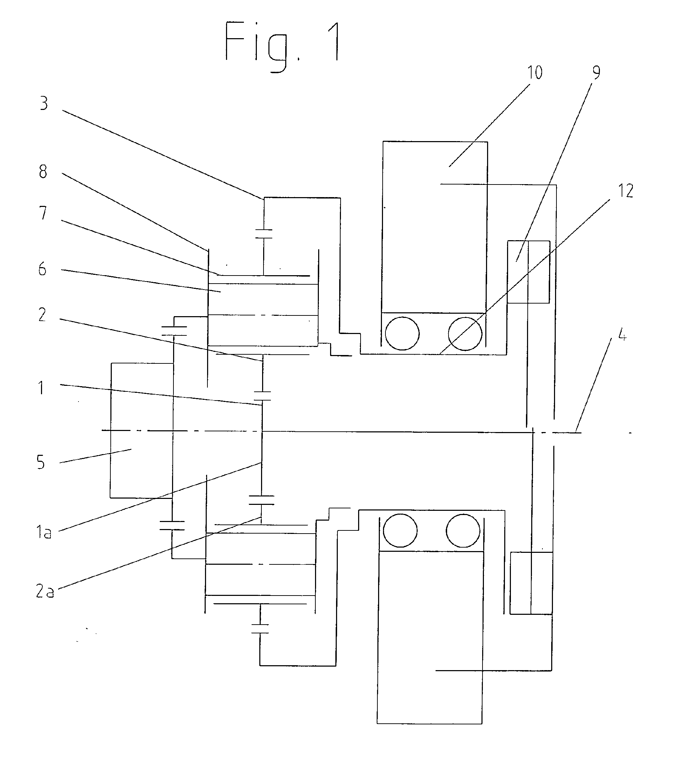

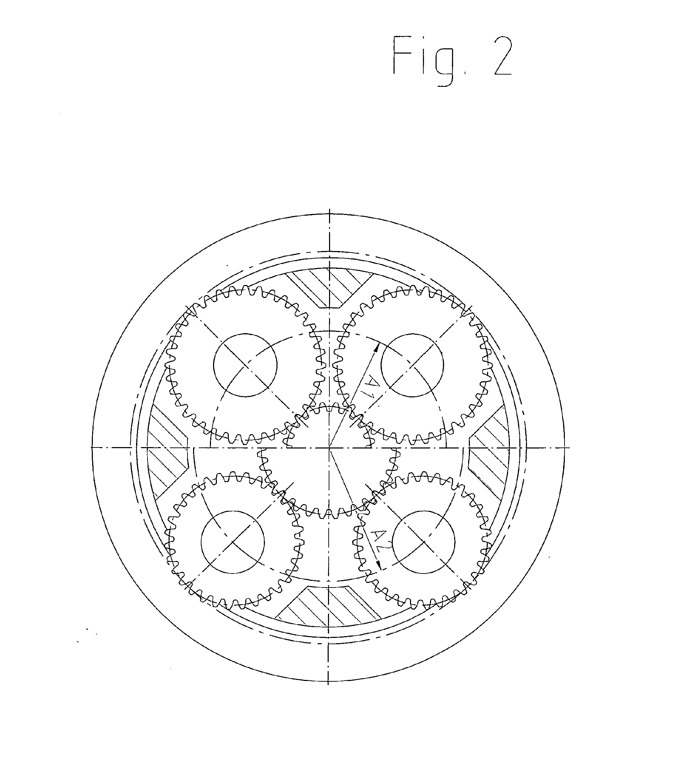

In Fig. 1 und Fig.2 sind jeweils in der oberen Hälfte die Bauteile in einer Größe dargestellt, die einem ersten Übersetzungsverhältnis von beispielsweise i=6 entsprechen, während in der unteren Hälfte die Bauteile in einer Größe dargestellt sind, die beispielsweise einem Übersetzungsverhältnis von i=4 entsprechen.

Die Antriebsvorrichtung umfasst ein Planetengetriebe mit einer Antriebswelle 4 und einer Abtriebswelle 5. Das Planetengetriebe umfasst bei der Ausführung mit dem ersten Übersetzungsverhältnis i=6 ein Sonnenrad 1, Planetenräder 2 und ein Hohlrad 3. Bei der Ausführung mit dem zweiten Übersetzungsverhältnis i=4 umfasst das Planetengetriebe ein Sonnenrad 1 a, Planetenräder 2a und das gleiche Hohlrad 3.

Aus Fig. 2 ist ersichtlich, das bei der Ausführungsform mit dem ersten Übersetzungsverhältnis i=6 der Achsabstand A1 zwischen der Achse des Sonnenrades 1 und den Achsen der Planetenräder 2 deutlich kleiner ist als der Achsabstand A2 zwischen der Achse des Sonnenrades 1 a und den Achsen der Planetenräder 2a des zweiten Übersetzungsverhältnisses i=4. Insbesondere ist das Sonnerad 1 des ersten Übersetzungsverhältnisses kleiner als das Sonnenrad 1 a des zweiten Übersetzungsverhältnisses, wohingegen die Planetenräder des ersten Übersetzungsverhältnisses größer sind als die Planetenräder des zweiten Übersetzungsverhältnisses.

Die Antriebswelle 4 ist drehfest mit dem Sonnerad 1,1a verbunden, wohingegen die Abtriebswelle 5 drehfest mit dem Planetenträger verbunden ist. Der Planetenträger umfasst einen Steg 8 sowie eine Lagerung mit einem Bolzen 6 und Lagerelementen 7 für die Lagerung der Planetenräder 2, 2a. Bei den unterschiedlichen Übersetzungsverhältnissen i=6 und i=4 können im wesentlichen die gleichen Planetenträger, insbesondere mit der gleichen Lagerung verwendet werden. Lediglich die Anordnung der Bohrungen für die Anbringung der Bolzen 6 an dem Steg 8 unterscheidet sich für das Übersetzungsverhältnis i=6 und das Übersetzungsverhältnis i=4.

Die Antriebsvorrichtung umfasst weiterhin ein Schwungrad 10, das über eine Kupplung 9 bzw. eine Kupplungsbremskombination mit der Antriebswelle 4 verbindbar ist. Das Schwungrad ist auf einem Lagerhals 12 des Hohlrades 3 drehbar gelagert. Der Lagerhals 12 und die entsprechenden Lagerungen für das Schwungrad sind bei beiden Übersetzungsverhältnissen i=6 und i=4 identisch. Bei unterschiedlichen Übersetzungsverhältnissen bzw. bei unterschiedlichen Anforderungen an das Getriebe müssen somit lediglich unterschiedliche Schwungräder 10, jedoch nicht unterschiedliche Lagerungen oder Lagerhälse 12 verwendet werden.

Die Abtriebswelle 5 kann mit einem Adapterflansch versehen sein, der zur Verbindung mit von dem Benutzer gewünschten speziell ausgeformten Verbindungsmitteln dienen kann.

Die Herstellung der Bauteile für die unterschiedlichen Übersetzungsverhältnisse i=6 und i=4 gestaltet sich somit vergleichsweise kostengünstig. Insbesondere können für die unterschiedlichen Sonnenräder 1, 1a und Planetenräder 2, 2a jeweils gleiche Rohteile verwendet werden, die entsprechend bearbeitet werden. Weiterhin können die gleichen Stege 8 genutzt werden, bei denen lediglich an unterschiedlichen Stellen Bohrungen vorgesehen werden müssen. Weiterhin besteht die Möglichkeit einen Steg 8 zu verwenden, der mit Bohrungen für die Anbringung der Bolzen 6 an unterschiedlichen Stellen ausgestattet ist.

## Patentansprüche

1. Verfahren zur Herstellung einer Antriebsvorrichtung für Werkzeugmaschinen wie Pressen oder dergleichen, umfassend ein Schwungrad (10) sowie ein Planetengetriebe mit einer Antriebswelle (4), die mit dem Schwungrad (10) kuppelbar ist, und einer Abtriebswelle (5), wobei entsprechend vorgegebenen Anforderungen an das Planetengetriebe dieses derart aus unterschiedlichen Getriebeteilen zusammengesetzt wird, dass es entweder ein erstes Übersetzungsverhältnis oder mindestens ein zweites Übersetzungsverhältnis aufweisen kann, **dadurch gekennzeichnet, dass** bei der Ausführung mit dem ersten Übersetzungsverhältnis ein Hohlrad (3), erste Planetenräder (2) und ein erstes Sonnenrad (1 ) und dass bei der Ausführung mit dem mindestens einen zweiten Übersetzungsverhältnis ein zweites, von dem ersten verschiedenes Sonnenrad (1a), zweite, von den ersten verschiedene Planetenräder (2a) und das Hohlrad (3) gemäß dem ersten Übersetzungsverhältnis oder ein diesem hinsichtlich seiner Eigenschaften gleichendes Hohlrad verwendet werden.

2. Verfahren nach Anspruch 1, **dadurch gekennzeichnet, dass** sich das erste und das zweite Sonnenrad (1, 1a) durch die Anzahl ihrer Zähne unterscheiden.

3. Verfahren nach einem der Ansprüche 1 oder 2, **dadurch gekennzeichnet, dass** sich das erste und das zweite Sonnenrad (1, 1a) durch ihre Durchmesser unterscheiden.

4. Verfahren nach einem der Ansprüche 1 bis 3, **dadurch gekennzeichnet, dass** sich die ersten und die zweiten Planetenräder (2, 2a) durch die Anzahl ihrer Zähne unterscheiden.

5. Verfahren nach einem der Ansprüche 1 bis 4, **dadurch gekennzeichnet, dass** sich die ersten und die zweiten Planetenräder (2, 2a) durch ihre Durchmesser unterscheiden.

6. Verfahren nach einem der Ansprüche 1 bis 5, **dadurch gekennzeichnet, dass** das Planetengetriebe einen Planetenträger umfasst, wobei bei der Ausführung mit dem ersten Übersetzungsverhältnis ein erster Steg (8) und Lagerungen für die Planetenräder (2) und wobei bei der Ausführung mit dem mindestens einen zweiten Übersetzungsverhältnis ein zweiter, von dem ersten verschiedener Steg (8) und die Lagerungen gemäß dem ersten Übersetzungsverhältnis oder diesen hinsichtlich ihrer Eigenschaften gleichende Lagerungen verwendet werden.

7. Verfahren nach Anspruch 6, **dadurch gekennzeichnet, dass** sich der erste Steg und der zweite Steg (8) durch die Anordnung von Bohrungen für Bolzen (6) der Lagerungen unterscheiden.

8. Verfahren nach einem der Ansprüche 1 bis 7, **dadurch gekennzeichnet, dass** das Planetengetriebe drei Planetenräder (2, 2a) oder vier Planetenräder (2, 2a) umfasst.

9. Verfahren nach einem der Ansprüche 1 bis 8 oder nach den Oberbegriff des Anspruchs 1, **dadurch gekennzeichnet, dass** an dem Hohlrad (3) ein Lagerhals (12) ausgebildet ist, auf dem das Schwungrad (10) gelagert werden kann, wobei auf dem Lagerhals (12) bei dem ersten Übersetzungsverhältnis ein anderes Schwungrad (10) als bei dem zweiten Übersetzungsverhältnis gelagert werden kann.

10. Verfahren nach einem der Ansprüche 1 bis 9, **dadurch gekennzeichnet, dass** das erste und das zweite Übersetzungsverhältnis einen Übersetzungsbereich zwischen 3 und 13, insbesondere zwischen 3,5 und 10, vorzugsweise zwischen 4 und 6 abdecken.

11. Verfahren nach Anspruch 10, **dadurch gekennzeichnet, dass** das zweite Übersetzungsverhältnis etwa zwischen 3,5 und 4,5, insbesondere etwa gleich 4 ist.

12. Verfahren nach einem der Ansprüche 10 oder 11, **dadurch gekennzeichnet, dass** das erste Übersetzungsverhältnis etwa zwischen 5 und 7, insbesondere etwa gleich 6 ist.

13. Verfahren nach einem der Ansprüche 1 bis 12, **dadurch gekennzeichnet, dass** das Planetengetriebe ein drittes Übersetzungsverhältnis, insbesondere ein drittes und ein viertes Übersetzungsverhältnis aufweisen kann.

14. Mehrzahl von Getriebeteilen zur Herstellung einer Antriebsvorrichtung für Werkzeugmaschinen, wie Pressen oder dergleichen, insbesondere für die Durchführung eines Verfahrens nach einem der Ansprüche 1 bis 13, umfassend mindestens ein Hohlrad (3), Planetenräder (2, 2a) und mindestens ein Sonnenrad (1, 1a), wobei die Mehrzahl von Getriebeteilen für die Herstellung mindestens zweier unterschiedlicher Typen von Planetengetrieben geeignet ist, von denen ein erster Typ ein erstes Übersetzungsverhältnis und ein zweiter Typ ein zweites Übersetzungsverhältnis aufweist, **dadurch gekennzeichnet, dass** die Mehrzahl von Getriebeteilen für den ersten Typ eines Planetengetriebes ein Hohlrad (3), ein erstes Sonnenrad (1 ) und erste Planetenräder (2) sowie für den zweiten Typ eines Planetengetriebes das Hohlrad (3) gemäß dem ersten Typ oder ein diesem hinsichtlich seiner Eigenschaften gleichendes Hohlrad, ein zweites, von dem ersten verschiedenes Sonnenrad (1a) und zweite, von den ersten verschiedene Planetenräder (2a) umfasst.

15. Mehrzahl von Getriebeteilen nach Anspruch 14, **dadurch gekennzeichnet, dass** die Mehrzahl von Getriebeteilen Stege (8) und Lagerungen für die Planetenräder (2, 2a) umfasst, wobei für den ersten Typ eines Planetengetriebes ein erster Steg (8) und Lagerungen für die Planetenräder (2) und für den zweiten Typ eines Planetengetriebes ein zweiter, von dem ersten verschiedener Steg (8) und die Lagerungen gemäß dem ersten Typ oder diesen hinsichtlich ihrer Eigenschaften gleichende Lagerungen vorgesehen sind.

16. Antriebsvorrichtung für Werkzeugmaschinen wie Pressen oder dergleichen, umfassend ein Schwungrad (10) sowie ein Planetengetriebe mit einer Antriebswelle (4), die mit dem Schwungrad (10) kuppelbar ist, und einer Abtriebswelle (5), **dadurch gekennzeichnet, dass** die Antriebsvorrichtung durch ein Verfahren nach einem der Ansprüche 1 bis 13 hergestellt ist und/oder dass das Planetengetriebe aus einer Mehrzahl von Getriebeteilen nach einem der Ansprüche 14 oder 15 hergestellt ist.

17. Antriebsvorrichtung nach Anspruch 16, **dadurch gekennzeichnet, dass** die Abtriebswelle (5) mit dem Steg (8) des Planetenträgers verbunden ist.

18. Antriebsvorrichtung nach einem der Ansprüche 16 oder 17, **dadurch gekennzeichnet, dass** die Antriebswelle (4) mit dem Sonnenrad (1, 1 a) verbunden ist.

19. Antriebsvorrichtung nach einem der Ansprüche 16 bis 18, **dadurch gekennzeichnet**, Schwungrad (10) von einem Motor angetrieben werden kann.

20. Antriebsvorrichtung nach Anspruch 19, **dadurch gekennzeichnet, dass** das Schwungrad (10) mit der Antriebswelle (4) über eine Kupplung (9) verbindbar ist.

21. Antriebsvorrichtung, nach einem der Ansprüche 16 bis 20, **dadurch gekennzeichnet ,dass** an dem Hohlrad (3) ein Lagerhals (12) ausgebildet ist, auf dem unterschiedliche Schwungräder (10) gelagert werden können.
